# EUROPEAN PATENT APPLICATION

(11) **EP 4 276 939 A1**
(43) Date of publication of application: **15.11.2023**
(21) Application number: 22924571.7
(22) Date of filing: 28.03.2022
(51) Int. Cl.: H01M 4/134

(54) **SILICON-CONTAINING NEGATIVE ELECTRODE ACTIVE MATERIAL, AND NEGATIVE ELECTRODE PLATE, SECONDARY BATTERY AND ELECTRIC DEVICE COMPRISING SAME**

(71) Applicant: Contemporary Amperex Technology Co., Limited, Ningde City, Fujian 352100 (CN)
(72) Inventor: WU, Yale, Ningde City, Fujian 352100 (CN); ZHANG, Ming, Ningde City, Fujian 352100 (CN); YANG, Jimin, Ningde City, Fujian 352100 (CN)
(74) Representative: Laufhütte, Dieter
(86) International application number: PCT/CN2022/083444
(87) International publication number: WO 2023/184098

(57) **Abstract**

The present application provides a silicon-containing negative electrode active material, and a negative electrode plate, a secondary battery, and an electrical device including the same. The silicon-containing negative electrode active material includes a silicon-based material and a conductive layer, located on the surface of the silicon-based material, including a polymer and a one-dimension conductive material, wherein, the polymer includes polar functional group(s) including one or more selected form carboxylic acid group, hydroxyl group, amide grous, amino group, carbonyl group, and nitro group; and the polar functional group(s) in the polymer have a mass percentage content as A1, and silicon in the silicon-based material has a mass percentage content as A2, the silicon-containing negative electrode active material satisfies: A2 is from 5% to 100% and A2/A1 is from 0.2 to 8. The silicon-containing negative electrode active material according to the present application has good electronic conductivity and small volume expansion effect and simultaneously has high reversible capacity and first coulombic efficiency; moreover, it still has good electronic conductivity after being prepared into negative electrode plates.

## Description

### TECHNICAL FIELD

The present application relates to the field of battery technology, and particularlay relates to a silicon-containing negative electrode active material, and a negative electrode plate, a secondary battery, and an electrical device comprising the same.

### BACKGROUND

In recent years, secondary batteries have been widely used in energy storage power systems such as water power, thermal power, wind power and solar power plants, and have been widely used in electric tools, electric bicycles, electric motorcycle, electric vehicles, military equipment, aerospace etc. With the application and promotion of secondary batteries, their energy density has received increasing attention. Graphite is the most commonly negative electrode active material used in secondary batteries, but it has a theoretical capacity pergram of only 372mAh/g and thus has very limited improvement in energy density. Silicon-based materials have a theoretical capacity pergram of up to 4200mAh/g, and thus is the most promising negative electrode active materials. Nevertheless, silicon-based materials have defects such as high volume expansion and poor electronic conductivity, which seriously affect the large-scale commercial application of silicon-based materials.

### SUMMARY

The purpose of the present application is to provide a silicon-containing negative electrode active material, and a negative electrode plate, a secondary battery, and an electrical device comprising the same. The silicon-containing negative electrode active material according to the present application has good electronic conductivity and small volume expansion effect and simultaneously has high reversible capacity and first coulombic efficiency; moreover, it still has good electronic conductivity after being prepared into negative electrode plates.

The first aspect of the present application provides a silicon-containing negative electrode active material, comprising a silicon-based material and a conductive layer, located on the surface of the silicon-based material, comprising a polymer and a one-dimension conductive material, wherein, the polymer comprises polar functional group(s) comprising one or more selected form carboxylic acid group, hydroxyl group, amide grous, amino group, carbonyl group, and nitro group; and the polar functional group(s) in the polymer have a mass percentage content as A1, and silicon in the silicon-based material has a mass percentage content as A2, the silicon-containing negative electrode active material satisfies: A2 is from 5% to 100% and A2/A1 is from 0.2 to 8.

The polymer in the conductive layer comprises polar functional group(s). The inventor, after researching, has found that when A2/A1 is controlled to fall the range between 0.2 and 8 by adjusting the mass percentage A1 of polar functional group(s) in the polymer and the mass percentage A2 of silicons in silicon-based materials, it can ensure that an appropriate amount of hydrogen bondings are formed between the polar functional group(s) in the polymer and the functional groups on the surface of one-dimension conductive materials and between the polar functional group(s) in the polymer and the functional groups on the surface of the silicon-based material; as a result, the one-dimension conductive materials effectively fix on the surface of the silicon-based material and the conductive layer would not completely shedding during the slurry stirring dispersion process. In addition, when A2/A1 is controlled in a range between 0.2 and 8, the polymer and one-dimension conductive material can crosslink and entangle with each other, making the conductive layer have flexibility and firmly cover the surface of the silicon-based material like a fishing net. Therefore, the silicon-containing negative electrode active material according to the present application has good electronic conductivity and can still have good electronic conductivity after being applied to the negative electrode plate.

In any embodiment according to the present application, A2 is from 10% to 80% and A2/A1 is from 0.6 to 2.5. In this way, the silicon-containing negative electrode active material according to the present application can have better electronic conductivity, higher reversible capacity, higher first coulombic efficiency, and lower volume expansion effect.

In any embodiment according to the present application, A1 is from 5% to 90%, and optionally from 10% to 75%. When the content of polar functional group(s) in the polymer falls within an appropriate range, it can ensure that an appropriate amount of hydrogen bondings are formed between the polar functional group(s) in the polymer and the functional groups on the surface of one-dimension conductive materials and between the polar functional group(s) in the polymer and the functional groups on the surface of the silicon-based material; as a result, the one-dimension conductive materials effectively fix on the surface of the silicon-based material. Further, the silicon-containing negative electrode active materials have improved electronic conductivity, reduced side reactions with electrolytes, and alleviated volume expansion.

In any embodiment according to the present application, the polymer has a weight average molecular weight of as B1 of above 100,000, optionally from 200,000 to 100,000,000.

In any embodiment according to the present application, the one-dimension conductive material has an aspect ratio as B2 of from 100 to 20,000, and optionally from 2,000 to 20,000. When the aspect ratio of the one-dimension conductive material falls within an appropriate range, good coating effect on the surface of silicon-based materials can be achieved. As a result, on the one hand, a long-range conductivity for the surface of silicon based materials can be provided, and on the other hand, the the conductive layer can readily form a fish-net cross-linked network structure, which can further improves the electronic conductivity and volume expansion of the surface of silicon based materials.

In any embodiment according to the present application, B1/B2 is from 5 to 200, and optionally from 5 to 50. When B1/B2 falls within an appropriate range, silicon-containing negative electrode active materials can have better electronic conductivity and lower volume expansion.

In any embodiment according to the present application, the one-dimension conductive material has a diameter of from 1nm to 30nm. When the diameter of one-dimension conductive materials falls within an appropriate range, the polymers and one-dimension conductive materials can better crosslink and entangle with each other, as a result, a fish-net cross-linked network structure in readily formed in the conductive layer to cover the surface of silicon-based materials. Accordingly, the silicon-containing negative electrode active materials can have better electronic conductivity and lower volume expansion.

In any embodiment according to the present application, the one-dimension conductive material has a length of from 0.5 µm to 20 µm. When the length of the one-dimension conductive materials falls within an appropriate range, the polymers and one-dimension conductive materials can better crosslink and entangle with each other, as a result, a fish-net cross-linked network structure in readily formed in the conductive layer to cover the surface of silicon-based materials. Accordingly, the silicon-containing negative electrode active materials can have better electronic conductivity and lower volume expansion.

In any embodiment according to the present application, the polymer has a glass transition temperature of below 150°C, optionally from -10°C to 120°C.

In any embodiment according to the present application, the polymer has a crystallinity of below 80%, optionally from 10% to 70%.

When the polymer has suitable glass transition temperature and crystallinity, it can better cross-link and entangle with the one-dimension conductive materials. As a result, the conductive layer can firmly cover the surface of the silicon-based material like a fishing net, so as to better improve the electronic conductivity and volume expansion of the silicon-based material surface.

In any embodiment according to the present application, the polymer comprises one or more selected from (methyl) acrylic acid and the salt homopolymer or copolymer thereof, hydroxymethylcellulose and the salt homopolymer or copolymer thereof, alginic acid and the salt homopolymer or copolymer thereof, polyacetamide homopolymer or copolymer, acrylamide homopolymer or copolymer, and ethylene alcohol homopolymer or copolymer. Those polymers can better crosslink and entangle with one-dimension conductive materials, making the conductive layer firmly cover the surface of the silicon-based material like a fishing net, so as to improve the electronic conductivity and volume expansion of the silicon-based material surface.

In any embodiment according to the present application, the one-dimension conductive material includes carbon nanotubes.

Optionally, the carbon nanotubes has a carbon content of above 90%. The higher the carbon content of carbon nanotubes, the less impurities they contain, accordinlgy the better their electronic conductivity. Therefore, silicon-containing negative electrode active materials can have better electronic conductivity.

Optionally, the carbon nanotube has I_{g}/I_{d} of above 40, wherein I_{g} represents the peak intensity of the carbon nanotube in the range of 1500 cm⁻¹ to 1650 cm⁻¹ in the Raman spectrum, and I_{d} represents the peak intensity of the carbon nanotube in the range of 100 cm⁻1 to 200 cm⁻¹ in the Raman spectrum. When carbon nanotubes has I_{g}/I_{d} that falls within an appropriate range, they have fewer defects *per se* and higher tensile strength. Accordingly, the conductive layer as formed can balance good flexibility and larger tensile strength, effectively alleviating the volume expansion of silicon-based materials.

Optionally, the carbon nanotubes has a specific surface area of above 500m²/^{g}. When the carbon nanotubes has the specific surface area that falls within an appropriate range, their contact area with the polymer is larger. As a result, more hydrogen bonds are formed, as so to facilitate mutual dispersion with the polymer and further form a uniform and stable conductive layer.

In any embodiment according to the present application, the silicon-based material includes one or more seleted from elemental silicon, silicon oxides, silicon carbon compounds, and silicon alloys. Optionally, the silicon-based material is dopped with one or two elements of lithium and magnesium.

In any embodiment according to the present application, based on the total mass of the silicon-containing negative electrode active material, the silicon-based material has a mass percentage content as W1 of from 90% to 98%; the polymer has a mass percentage content as W2 of from 1% to 9%; and the one-dimension conductive material has a mass percentage content as W3 of from 0.1% to 1%.

In any embodiment according to the present application, W2/W3 is from 7 to 20. When W2/W3 falls within an appropriate range, it can ensure that an appropriate amount of hydrogen bondings are formed between the polar functional group(s) in the polymer and the functional groups on the surface of one-dimension conductive materials and between the polar functional group(s) in the polymer and the functional groups on the surface of the silicon-based material; as a result, the one-dimension conductive materials effectively fix on the surface of the silicon-based material and the electronic conductivity and volume expansion of the silicon-based material surface are imporved.

In any embodiment according to the present application, the conductive layer has a thickness of from 1nm to 2 µm.

In any embodiment according to the present application, the silicon-containing negative electrode active material has a powder resistivity of from 0.70 Ω-cm to 0.89 Ω-cm.

In any embodiment according to the present application, the silicon-containing negative electrode active material has a average particle size Dv50 of from 2 µm to 10 µm.

In any embodiment according to the present application, the silicon-containing negative electrode active material has a specific surface area of from 0.8 m²/g to 5 m²/g.

In any embodiment according to the present application, the silicon-containing negative electrode active material has the I_{g}/I_{d} of from 0.1 to 200, wherein I_{g} represents the peak intensity of the silicon-containing negative electrode active material in the range of 1500 cm⁻¹ to 1650 cm⁻¹ in the Raman spectrum, and I_{d} represents the peak intensity of the silicon-containing negative electrode active material in the range of 100 cm⁻¹ to 200 cm⁻¹ in the Raman spectrum.

The second aspect according to the present application provides a negative electrode plate, comprising a negative current collector and a negative electrode film layer located on at least one of the surfaces of the negative current collector, wherein the negative electrode film layer comprises the silicon-containing negative electrode active material, conductive agent, and binder according to the first aspect according to the present application.

The silicon-containing negative electrode active material according to the present application has good electronic conductivity and small volume expansion effect and simultaneously has high reversible capacity and first coulombic efficiency; moreover, it still has good electronic conductivity after being prepared into negative electrode plates. Accordingly, the negative electrode plate according to the present application has good electronic conductivity, high capacity, high first coulombic efficiency, and small volume expansion.

In any embodiment according to the present application, the negative electrode film layer further comprises graphite.

The third aspect according to the present application provides a secondary battery, comprising the silicon-containing negative electrode active material according to the first aspect of the present application, or the negative electrode plate according to the second aspect of the present application.

The fourth aspect according to the present application provides an electrical device, comprising the secondary battery according to the third aspect of the present application.

The secondary battery according to the present application has high energy density and simultaneously good cycling performance and storage performance. The electrical device according to the present application comprises the secondary battery provided according to the present application, and thus at least has advantages the same as the secondary battery.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Figure 1 is a schematic diagram of a secondary battery according to one embodiment of the present application.
Figure 2 is an exploded view of a secondary battery according to the embodiment of Figure 1.
Figure 3 is a schematic diagram of a battery module according to one embodiment of the present application.
Figure 4 is a schematic diagram of a battery pack according to one embodiment of the present application.
Figure 5 is an exploded view of the battery pack according to an embodiment of the present application as shown in Figure 4.
Figure 6 is a schematic diagram of an electrical device according to an embodiment of the present application using the secondary battery of the present application as power.

The drawings may not necessarily be drawn according to the actual scale. In the drawings, the references are illustrated as follows: 1 battery pack, 2 upper box, 3 lower box, 4 battery module, 5 secondary battery, 51 shell, 52 electrode assembly, and 53 cover plate.

### DETAILED DESCRIPTION

Hereinafter, embodiments of the silicon-containing negative electrode active material, and a negative electrode plate, a secondary battery, and an electrical device comprising the same that specifically disclosed in the present application will be described in detail with reference to the accompanying drawings as appropriate. However, unnecessary detailed descriptions may be omitted in some cases, for example the detailed description of a well-known item or the repetitive description of an actual identical structure so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "ranges" disclosed in this application are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising/including/containing" and "comprise/includ/contain" mentioned in the present application means that it is drafted in an open mode or in a close mode. For example, the transition phases "comprising" and "comprising" may mean that other components not listed may also be included or contained, or only the listed components may be included or contained.

In the present application herein, unless otherwise stated, the term "or" is inclusive. For example, the phrase "A or B" means A, B, or both A and B". More specifically, either of the following conditions meets "A or B ": A is true (or present) and B is false (or absent); A is false (or absent) and B is true (or present); or both A and B are true (or present).

At present, silicon-based materials, when being used in secondary batteries, usually need to be stirred and dispersed evenly with graphite, binders, conductive agents, etc. before being coated on the surface of the negative current collector. Neverthethelss, the inventor of the present application has found during the research process that during the stirring dispersion process, most of the conductive agents would aggregate onto the surface of graphite, only a small amount of conductive agents locat on the surface of silicon-based materials. As a result, the electronic conductivity on the surface of silicon-based materials in the negative electrode plate is poor, and the energy density of the secondary battery cannot be effectively improved.

In view of this, effective technical means are needed to improve the electronic conductivity of the silicon-based material surface in the negative electrode plate.

The first aspect of the embodinents according to the present application provides a silicon-containing negative electrode active material, which has good electronic conductivity *per se* and still has good electronic conductivity after being prepared into negative electrode plates. In particular, the silicon-containing negative electrode active material according to the first aspect of the present application comprises a silicon-based material and a conductive layer, located on the surface of the silicon-based material, comprising a polymer and a one-dimension conductive material, wherein, the polymer comprises polar functional group(s) comprising one or more selected form carboxylic acid group, hydroxyl group, amide grous, amino group, carbonyl group, and nitro group; and the polar functional group(s) in the polymer have a mass percentage content as A1, and silicon in the silicon-based material has a mass percentage content as A2, the silicon-containing negative electrode active material satisfies: A2 is from 5% to 100% and A2/A1 is from 0.2 to 8.

Silicon-based materials include, but are not limited to, one or more selected from elemental silicon, silicon oxides (such as SiOx, 0<x ≤ 2), silicon carbon compounds (such as having encapsulated structures or embedded structures), and silicon alloys. In some embodiments, the silicon-based material can be dopped with one or both elements of lithium and magnesium. There are no special limitation to the method of doping lithium and magnesium in silicon-based materials according to the present application, such as electrochemical deposition method may be adoppted.

The silicon-based materials has the mass percentage content of silicon as A2 of from 5% to 100%. Optionally, A2 is from 5% to 95%, from 10% to 90%, from 10% to 85%, from 10% to 80%, from 15% to 85%, from 20% to 80%, from 25% to 75%, from 30% to 70%, from 35% to 65%, or 4 from 0% to 60%. When A2 falls within an appropriate range, silicon-based materials can simultaneously have higher volumetric capacity and lower volume expansion effect.

The polymer in the conductive layer comprises polar functional group(s). The inventor, after researching, has found that when A2/A1 is controlled to fall the range between 0.2 and 8 by adjusting the mass percentage A1 of polar functional group(s) in the polymer and the mass percentage A2 of silicons in silicon-based materials, it can ensure that an appropriate amount of hydrogen bondings are formed between the polar functional group(s) in the polymer and the functional groups on the surface of one-dimension conductive materials and between the polar functional group(s) in the polymer and the functional groups on the surface of the silicon-based material; as a result, the one-dimension conductive materials effectively fix on the surface of the silicon-based material and the conductive layer would not completely shed during the slurry stirring dispersion process. In addition, when A2/A1 is controlled in a range between 0.2 and 8, the polymer and one-dimension conductive material can crosslink and entangle with each other, making the conductive layer have flexibility and firmly cover the surface of the silicon-based material like a fishing net. Therefore, the silicon-containing negative electrode active material according to the present application has good electronic conductivity and can still have good electronic conductivity after being applied to the negative electrode plate.

The inventor has found that when A2/A1 is less than 0.2, the content of polar functional group(s) in the polymer is relatively high, and the content of silicon in silicon-based materials is relatively low. As a result, most of the polar functional group(s) in the polymer would form hydrogen bonds with the functional groups on the surface of one-dimension conductive materials, leading to cross-linking reactions or entanglement, and a small number of polar functional group(s) could form hydrogen bonds with the functional groups on the surface of silicon-based materials. Accordingly, the conductive layer will easily shed during the slurry stirring dispersion process and cannot firmly bond with silicon-based materials. Therefore, when A2/A1 is less than 0.2, the electronic conductivity of the silicon-containing negative electrode active material in the prepared negative electrode plate remains poor.

The inventor has found that when A2/A1 is greater than 8, the content of polar functional group(s) in the polymer is relatively low, and the content of silicon in silicon-based materials is relatively high. As a result, most of the polar functional group(s) in the polymer would form hydrogen bonds preferentially with the functional groups on the surface of the silicon-based material, and only a small number of the polar functional group(s) could form hydrogen bonds with the functional groups on the surface of the one-dimension conductive material. Accordingly, it impossible for the conductive layer to form a fish-net cross-linked network structure. Therefore, when A2/A1 is greater than 8, the polymer can only hydrogen bond with the silicon-based material in the longitudinal direction of the silicon-containing negative electrode active material, but cannot achieve a good coating effect in the transverse direction of the silicon-containing negative electrode active material. As a reseult, the one-dimension conductive materials cannot effectively fix on the surface of the silicon-based material, resulting in poor electronic conductivity of the silicon-containing negative electrode active material in the prepared negative electrode plate.

In addition, silicon-based materials have a sevious volume expansion effect, the existing binders, however, cannot effectively alleviate or suppress the volume expansion of silicon-based materials. Moreover, silicon-based materials will pulverize during repeated intercalate into and deintercalate out of the ions. Silicon-based materials may have side reactions with electrolytes after long-term cycling, whic would affect the cycling performance of secondary batteries.

The conductive layer according to the present application has a flexible structure and can firmly cover the surface of the silicon-based material like a fishing net. On the one hand, it can effectively fix the one-dimension conductive material on the surface of the silicon-based material, improve the electronic conductivity of the silicon-containing negative electrode active material, and on the other hand, it can reduce the continuous side reactions between the silicon-based material and the electrolyte, and reduce the irreversible consumption of active ions. In addition, the conductive layer of the present application has a flexible structure, which can alleviate the volume expansion effect caused by stress concentration in silicon-based materials and reduce the probability of powder formation in silicon-based materials.

Therefore, the silicon-containing negative electrode active material according to the present application has good electronic conductivity and small volume expansion effect, and simultaneously have high reversible capacity, and first coulombic efficiency. Accordingly, the secondary battery using the above silicon-containing negative electrode active material according to the present application have high energy density and simultaeoulsy have good cycling energy and storage performance.

In some embodiments, A2/A1 may be from 0.2 to 7, from 0.3 to 6, from 0.4 to 5, from 0.5 to 4, from 0.6 to 2.5, or from 0.6 to 2. In this case, the electronic conductivity of the silicon-containing negative electrode active material is higher, the volume expansion effect is smaller, and the reversible capacity and first coulombic efficiency are higher.

In some embodiments, A2 is from 10% to 80% and A2/A1 is from 0.6 to 2.5.

In some embodiments, A1 is from 5% to 90%. Optionally, A1 is from 10% to 90%, from 20% to 90%, from 30% to 90%, from 40% to 90%, from 10% to 75%, from 20% to 75%, from 30% to 75%, or from 40% to 75%. When the content of polar functional group(s) in the polymer falls within an appropriate range, it can ensure that an appropriate amount of hydrogen bondings are formed between the polar functional group(s) in the polymer and the functional groups on the surface of one-dimension conductive materials and between the polar functional group(s) in the polymer and the functional groups on the surface of the silicon-based material. As a result, the one-dimension conductive materials effectively fix on the surface of the silicon-based material. Further, the electronic conductivity of silicon-containing negative electrode active materials is improved, the side reactions between silicon-containing negative electrode active materials and electrolytes are reduced, and the volume expansion of silicon-containing negative electrode active materials is alleviated.

When the polymer has a low content of polar functional group(s), it may not be able to form appropriate hydrogen bonds with the functional groups on the surface of the silicon-based material in the longitudinal direction of the silicon-containing negative electrode active material. As a result, the conductive layer would shed. Moreover, polymers may not be able to form appropriate hydrogen bonds with functional groups on the surface of one-dimension conductive materials in the transverse direction of silicon-containing negative electrode active materials; as a result, the one-dimension conductive materials may not effectively fix on the surface of silicon-based materials.

When the polymer has high content of polar functional group(s), it is prone to self-crosslinking, and has poor dispersion effect with one-dimension conductive materials in the transverse direction of silicon-containing negative electrode active materials may deteriorate. As a result, it is difficult to form a uniform and stable conductive layer. Moreover, stress concentration areas and poor electronic conductivity areas may appear in the conductive layer. Therefore, when the polymer has high content of polar functional group(s), the improvement on the volume expansion of silicon-based materials may be insignificant. Due to the poor electronic conductivity of some areas on the surface of silicon-based materials, the improvement of reversible capacity and first coulombic efficiency of silicon-containing negative electrode active materials may be insignificant.

In some embodiments, the polymer has a weight average molecular weight (dimensionless) as B1 of exceeding 100,000. Optionally, B1 is from 200,000 to 100,000,000.

In some embodiments, the one-dimension conductive material has an aspect ratio as B2 of from 100 to 20,000. Optionally, B2 is from 200 to 20,000, from 500 to 20,000, from 1,000 to 20,000, from 1,500 to 20,000, from 2,000 to 20,000, from 3,000 to 20,000, from 4,000 to 20,000, from 200 to 15,000, from 500 to 15,000, from 1,000 to 10,000, from 2,500 to 10,000, from 2,000 to 10,000, from 3,000 to 10,000, from 3,000 to 10,000, from ,3000 to 10,000, or from 4,000 to 10,000.

When the one-dimension conductive materials has an aspect ratio that falls within an appropriate range, they can wrap around each other on the surface of silicon-based materials to achive good coating effect. On the one hand, it can provide long-range conductivity for the surface of silicon-based materials, and on the other hand, it is conducive to the formation of a fish-net cross-linked network structure in the conductive layer, which better improves the electronic conductivity and volume expansion of the surface of silicon-based materials.

When the one-dimension conductive materials has small aspect ratio, they have poor long-range conductivity, and thus would not easily entangled together, and cannot easily intertwined with polymers to achive good coating effect. As a result, a structurally complete conductive layer may not be formed on the surface of silicon-based materials, and the improvement on the electronic conductivity and volume expansion of silicon-based materials may be insignificant. When the one-dimension conductive materials has large aspect ratio, they are more likely to entangle themselves, but they will have poor dispersion with polymers, making it difficult to form a uniform and stable conductive layer. Moreover, stress concentration areas and poor electronic conductivity areas are also prone to appear in the conductive layer. Accordingly, the improvement on the electronic conductivity and volume expansion on the surface of silicon-based materials may be insignificant.

In some embodiments, the weight average molecular weight B 1 of the polymer and the aspect ratio B2 of the one-dimension conductive material satisfy a B 1B2 is from 5 to 200. Optionally, B 1B2 is from 5 to 150, from 5 to 100, from 5 to 90, from 5 to 80, from 5 to 70, from 5 to 60, from 5 to 50, from 10 to 90, from 10 to 80, from 10 to 70, from 10 to 60, from 10 to 50, from 15 to 90, from 15 to 80, from 15 to 70, from 15 to 60, or from 15 to 50.

When B1/B2 falls within an appropriate range, the polymers and one-dimension conductive materials can better disperse with each other, result in forming a uniform and stable conductive layer. When B 1/B2 falls within an appropriate range, the polymers and one-dimension conductive materials can crosslink and entangle with each other, which is beneficial for the conductive layer to form a fish-net cross-linked network structure to cover the surface of silicon-based materials. When B1/B2 falls within an appropriate range, an appropriate amount of hydrogen bonding can be formed between the polar functional group(s) in the polymer and the functional groups on the surface of one-dimension conductive materials, and between the polar functional group(s) in the polymer and the functional groups on the surface of silicon-based materials, which is readily for the one-dimension conductive materials to effectively fix on the surface of silicon-based materials. Therefore, when B 1/B2 falls within the appropriate range, the silicon-containing negative electrode active material can have better electronic conductivity and lower volume expansion.

In some embodiments, the diameter of the one-dimension conductive material is from 1nm to 30nm. Optionally, the diameter of the one-dimension conductive material is from 2nm to 30nm, from 2nm to 25nm, from 2nm to 20nm, from 2nm to 15nm, from 2nm to 10nm, from 5nm to 30nm, from 5nm to 25nm, from 5nm to 20nm, from 5nm to 15nm, or from 5nm to 10nm.

When the diameter of one-dimension conductive materials falls within an appropriate range, the polymers and one-dimension conductive materials can better crosslink and entangle with each other, which is conducive to the formation of a fishnet like cross-linked network structure in the conductive layer and covering the surface of silicon-based materials. Therefore, silicon-containing negative electrode active materials can have better electronic conductivity and lower volume expansion at this time.

When the one-dimension conductive material has small diameter, its surface energy is usually large and it is prone to self-aggregation. It may be difficult to maintain a one-dimensional linear shape in the conductive layer, and the dispersion with the polymer may deteriorate, making it difficult to form a uniform and stable conductive layer. Moreover, stress concentration areas and with poor electronic conductivity areas are prone to appear in the conductive layer, which may not significantly improve the electronic conductivity and volume expansion on the surface of silicon-based materials. When the one-dimension conductive materials has large diameter, there may be more surface defects, and their flexibility may deteriorate, which may not form a strong and tough conductive layer. Therefore, the improvement effect on the surface electronic conductivity and volume expansion of silicon-based materials may be insignificant.

In some embodiments, the length of the one-dimension conductive material is from 0.5 µm to 20 µm. Optionally, the length of the one-dimension conductive material is from 1 µm to 20 µm, from 1 µm to 18 µm, from 1 µm to 16 µm, from 1 µm to 14 µm, from 1 µm to 12 µm, from 1 µm to 10 µm, from 1 µm to 8 µm, from 2 µm to 20 µm, from 2 µm to 18 µm, from 2 µm to 16 µm, from 2 µm to 14 µm, from 2 µm to 12 µm, from 2 µm to 10 µm, or from 2 µm to 8 µm.

When the length of one-dimension conductive materials falls within an appropriate range, the polymers and one-dimension conductive materials can better crosslink and entangle with each other, which is readily to form a fish-net cross-linked network structure in the conductive layer to cover the surface of silicon-based materials. Therefore, silicon-containing negative electrode active materials can have better electronic conductivity and lower volume expansion at this time.

When the one-dimension conductive materials have small length, hey are not easily entangled with polymers to achieve good coating effect. Therefore, the one-dimension conductive materials may not effectively fix on the surface of silicon-based materials, and the improvement on the electronic conductivity and volume expansion of silicon-based materials may be insignificant. When the one-dimension conductive materials have large length, they are prone to self-aggregation, which may make it difficult to maintain one-dimensional linear morphology in the conductive layer. As a result, the dispersion with the polymer may deteriorate, making it difficult to form a uniform and stable conductive layer. Additionally, stress concentration areas and poor electronic conductivity areas are prone to appear in the conductive layer, thus, the improvement on the electronic conductivity and volume expansion of the surface of silicon-based materials may be insignificant.

In some embodiments, the glass transition temperature (Tg) of the polymer is below 150°C, and optionally, the glass transition temperature of the polymer is from -10°C to 120°C. In some embodiments, the crystallinity of the polymer is below 80%, and optionally, the crystallinity of the polymer is from 10% to 70%. When the polymer has a suitable glass transition temperature and crystallinity, it can better cross-link and entangle with one-dimension conductive materials. As a result, the conductive layer can firmly cover the surface of the silicon-based material like a fishing net, better improving the electronic conductivity and volume expansion of the silicon-based material surface.

In some embodiments, the polymers include, but are not limited to, one or more selected from (methyl) acrylic acid and the salt homopolymer or copolymer thereof, hydroxymethylcellulose and the salt homopolymer or copolymer thereof, alginic acid and the salt homopolymer or copolymer thereof, polyacetamide homopolymer or copolymer, acrylamide homopolymer or copolymer, and ethylene alcohol homopolymer or copolymer. According to the present application, "copolymer" refers to any of random copolymers, alternating copolymers, block copolymers, or graft copolymers. Copolymers can be copolymerized between the aforementioned monomers or with other monomers, especially vinyl monomers. Vinyl monomers include but are not limited to one or more of acrylic acid, acrylamide, acrylate, ethylene, propylene, butene, butadiene, isoprene, styrene, and vinyl acetate.

Optionally, the polymer includes one or more seleted from poly (meth) acrylic acid, poly (meth) acrylic acid sodium, poly (meth) acrylic acid potassium, poly (meth) acrylic acid magnesium, hydroxymethyl cellulose, hydroxymethyl cellulose sodium, hydroxymethyl cellulose potassium, hydroxymethyl cellulose lithium, alginate, sodium alginate, potassium alginate, lithium alginate, magnesium alginate, aluminum alginate, polyacetamide, polyvinyl alcohol, polyacrylamide, (methyl) acrylic acid acrylamide copolymer, (methyl) acrylic acid acrylamide ethylene copolymer, ethylene (methyl) acrylic acid copolymer, (methyl) acrylic acid vinyl acetate copolymer resin, (methyl) acrylic acid ethylene acetate copolymer, (methyl) acrylic acid acrylate copolymer, and ethylene vinyl alcohol copolymer.

Those polymers can better crosslink and entangle with one-dimensional conductive materials. As a result, the conductive layer can firmly cover the surface of the silicon-based material like a fish- net, so as to better improve the electronic conductivity and volume expansion of the silicon based material surface. When these polymers have an appropriate amount of polar functional groups, they can form appropriate hydrogen bonds with functional groups or defects on the surface of one-dimensional conductive materials, allowing the conductive layer to balance flexibility and toughness, thereby further alleviating the volume expansion of silicon-based materials.

In some embodiments, the one-dimension conductive material includes one or more selected from carbon nanotubes, metal fibers, carbon fibers, and hollow carbon fibers. Optionally, the one-dimension conductive material includes carbon nanotubes, such as single walled carbon nanotubes, multi walled carbon nanotubes, or combinations thereof.

Optionally, the carbon content of the carbon nanotubes is above 90%. The higher the carbon content of carbon nanotubes, the less impurities they contain, and thus the better their electronic conductivity. Therefore, silicon-containing negative electrode active materials can have better electronic conductivity.

Optionally, the I_{g}/I_{d} of the carbon nanotube is above 40, wherein I_{g} represents the peak intensity of the carbon nanotube in the range of 1500 cm⁻¹ to 1650 cm⁻¹ in the Raman spectrum, and I_{d} represents the peak intensity of the carbon nanotube in the range of 100 cm⁻¹ to 200 cm⁻¹ in the Raman spectrum. When the carbon nanotubes have I_{g}/I_{d} that falls within an appropriate range, they have fewer defects and higher tensile strength. Therefore, the conductive layer formed can balance good flexibility and larger tensile strength, effectively alleviating the volume expansion of silicon-based materials.

Optionally, the specific surface area of the carbon nanotubes is above 500m²/g. When the carbon nanotubes have specific surface area that falls within an appropriate range, their contact area with the polymer is larger, and thus can form more hydrogen bonds, so as to facilitate mutual dispersion with the polymer and forming a uniform and stable conductive layer.

In some embodiments, based on the total mass of the silicon-containing negative electrode active material, the silicon-based material has the mass percentage content as W1 of from 90% to 98%.

In some embodiments, based on the total mass of the silicon-containing negative electrode active material, the polymer has the mass percentage content as W2 of from 1% to 9%. When the content of polymer falls within an appropriate range, it can ensure that one-dimension conductive materials fully cover the surface of silicon-based materials, ensuring that most of the surface of silicon-based materials (such as over 70%, over 80%, over 90%, or even all) are covered. This can better improve the electronic conductivity and volume expansion of the surface of silicon-based materials, reduce the contact between silicon-based materials and electrolytes, reduce the decomposition and rupture of SEI membranes, and reduce the probability of powdering of silicon-containing negative electrode active materials.

In some embodiments, based on the total mass of the silicon-containing negative electrode active material, the one-dimension conductive materials have the mass percentage content as W3 of from 0.1% to 1%. When the content of one-dimension conductive materials falls within an appropriate range, it can ensure that the surface of the silicon-containing negative electrode active material has good electronic conductivity, while ensuring the formation of a fishing net like coating structure on the surface of the silicon-based material, so aso to reduce electronic polarization and better alleviate the volume expansion of the silicon-based material.

In some embodiments, the mass ratio W2/W3 of the polymer to the one-dimension conductive material is from 7 to 20. Optionally, W2/W3 is from 7 to 20, from 7 to 18, from 7 to 16, from 7 to 14, from 9 to 20, from 9 to 18, from 9 to 16, or from 9 to 14.

When W2/W3 falls within an appropriate range, it can ensure the formation of appropriate hydrogen bonds between the polar functional group(s) in the polymer and the functional groups on the surface of the one-dimension conductive material, as well as between the polar functional group(s) in the polymer and the functional groups on the surface of the silicon-based material. This effectively fixes the one-dimension conductive material on the surface of the silicon-based material and improves the electronic conductivity and volume expansion of the silicon-based material surface.

When the mass of polymers and one-dimension conductive materials is relatively large, there are more hydrogen bonds between the polymers and silicon-based materials in the longitudinal direction of the silicon-containing negative electrode active material. However, in the transverse direction of the silicon-containing negative electrode active material, the polymers may not be able to form more hydrogen bonds and effectively crosslink and wrap with the one-dimension conductive material, thereby affecting the strength of the conductive layer, The improvement in electronic conductivity and volume expansion on the surface of silicon-based materials may be insignificant.

When the mass ratio between polymers and one-dimension conductive materials is small, the hydrogen bonds formed between polymers and silicon-based materials decrease in the longitudinal direction of silicon-containing negative electrode active materials. The affinity between the conductive layer and silicon-based materials may be affected, resulting in the conductive layer falling off during the slurry stirring and dispersion process.

In some embodiments, the thickness of the conductive layer is from 1nm to 2 µm. When the conductive layer has small thickness, its alleviation of volume expansion of silicon-based materials may be insignificant. When the conductive layer has large thickness, the resistance of active ions during de embedding may increase, and concentration differences between the inside and outside of the conductive layer can easily form, which may affect the reversible capacity pergram and first coulombic efficiency of silicon-based materials.

In some embodiments, the powder resistivity of the silicon-containing negative electrode active material is from 0.70 Ω-cm to 0.89 Ω-cm. Optionally, the powder resistivity of the silicon-containing negative electrode active material is from 0.70 Ω-cm to 0.85 Ω-cm, from 0.70 Ω-cm to 0.82 Ω-cm, or from 0.70 Ω-cm to 0.80 Ω-cm.

In some embodiments, the specific surface area of the silicon-containing negative electrode active material is from 0.8m²/g to 5m²/g. When the specific surface area of silicon-containing negative electrode active materials falls within an appropriate range, they can simultaneously have higher capacity and higher first coulombic efficiency.

In some embodiments, the average particle size Dv50 of the silicon-containing negative electrode active material is from 2 µm to 10 µm. When the average particle size Dv50 of the silicon-containing negative electrode active material falls within an appropriate range, it is beneficial to improve the transmission performance of active ions and electrons simultaneously.

In some embodiments, the Ig/Id of the silicon-containing negative electrode active material is 0.¹ to 200, where I_{g} represents the peak intensity of the silicon-containing negative electrode active material in the range of 1500 cm⁻¹ to 1650 cm⁻¹ in the Raman spectrum, and I_{d} represents the peak intensity of the silicon-containing negative electrode active material in the range of 100 cm⁻1 to 200 cm⁻¹ in the Raman spectrum.

According to the present application, the content of elements in the material (such as the mass percentage content of silicon in silicon-based materials, carbon content in carbon nanotubes, etc.) has meanings well-known in the art and can be determined using instruments and methods well-known in the art, for example, by means of X-ray photoelectron spectroscopy (XPS).

According to the present application, the mass percentage content of polar functional group(s) in the polymer has a meaning well-known in the art, and can be determined using instruments and methods well-known in the art. For example, titration methods (such as acid-base titration, redox titration, precipitation titration), moisture determination, gas determination, colorimetric analysis, infrared spectroscopy, and nuclear magnetic resonance spectroscopy can be used for determination.

According to the present application, a weight average molecular weight of the polymer has meaning well-known in the art and can be determined using instruments and methods well-known in the art. For example, gel permeation chromatography (GPC) can be used for determination, and Agilent 1290 Infinity II GPC system can be used for determination.

According to the present application, the glass transition temperature of the polymer has a meaning well-known in the art and can be determined using instruments and methods well-known in the art. For example, referring to GB/T 29611-2013 Rubber, raw-Determinaition of the glass transition temperature-Differential scanning calorimetery (DSC), Mettler Toledo differential scanning calorimetry can be used for the determination.

According to the present application, the crystallinity of the polymer has a meaning well-known in the art and can be determined using instruments and methods well-known in the art. For example, differential scanning calorimetry (DSC) can be used for determination.

According to the present application, the powder resistivity of the material has a meaning well-known in the art and can be determined using instruments and methods well-known in the art. For example, the four probe method can be used for determination according to GB/T 30835-2014. The quality of the test sample can range from 0.6g to 0.7g, and the test pressure can be 16Mpa.

According to the present application, the average particle size Dv50 of the material, having a meaning well-known in the art, represents the particle size corresponding to that when the cumulative volume distribution percentage of the material reaches 50%. It can be measured using instruments and methods well-known in the art. For example, referring to GB/T 19077-2016 Particle size analysis-Laser diffraction methods, it can be conveniently dertermined with a laser particle size analyzer, such as Mastersizer 2000E laser particle size analyzer from British Malvern Instruments Co., Ltd.

According to the present application, the specific surface area of the material has a meaning well-known in the art and can be determined using instruments and methods well-known in the art. For example, referring to GB/T 19587-2017, the nitrogen adsorption specific surface area analysis test method can be used for testing, and the BET (Brunauer Emmett Teller) method can be used to calculate the nitrogen adsorption specific surface area analysis test. The nitrogen adsorption specific surface area analysis test can be conducted using the Tri Star 3020 specific surface area pore size analysis tester from Micromeritics in the United States.

### [Preparation method]

The first aspect according to the present application provides a method for preparing a silicon-containing negative electrode active material, this method can be used to prepare the silicon-containing negative electrode active material according to any embodiment according to the first aspect of the present application.

The method for preparing the silicon-containing negative electrode active material according to the present application comprises the following steps: step (1), providing a first slurry comprising a polymer and a one-dimension conductive material; step (2): adding the silicon-based material slowly into the first slurry under stirring to achieve even disperse, to obtain the second slurry, and then drying the second slurry to obtain the silicon-containing negative electrode active material.

Optionally, the second slurry in step (2) has the solid content of from 0.8% to 30%.

Optionally, the second slurry in step (2) has the solid content of from 3% to 50%, and a viscosity at room temperature of from 50cps to 1500cps. When the second slurry has low solid content and low viscosity, it may settle and cannot effectively coat the surface of the silicon-based material. When the second slurry has high solid content and high viscosity, the second slurry may become gel, which is impossible to dry.

Optionally, in step (2), the stirring and dispersion speed is between 400 rpm to 800 rpm, and the stirring and dispersion time is between 1 hour and 3 hours.

Optionally, the drying in step (2) is spray drying, but is not limited thereto according to the present application. In particular, the temperature of spray drying may be from 120°C to 300°C. When the spray drying temperature falls within the appropriate range, it is conducivent to form hydrogen bonding between polymers and between polymers and one-dimension conductive materials to form a fish-net cross-linked network structure, improve the electronic conductivity of silicon-based materials, reduce the continuous side reaction between silicon-based materials and electrolytes, and alleviate the volume expansion of silicon-based materials.

When the spray drying temperature is lower than 120 °C, the coverage area of the conductive layer on the surface of the silicon-based material is small, so there may be more side reactions between the silicon-based material and the electrolyte. When the spray drying temperature is higher than 300°C, the polymer is prone to dehydration and condensation reaction, leading to the structure change of the conductive layer.

In step (1), the polymer and one-dimension conductive material can be simultaneously added to deionized water to obtain the first slurry, or the polymer and one-dimension conductive material can be separately added to obtain the first slurry. For example, in some embodiments, the preparation method of the first slurry includes steps: step (11), adding one-dimension conductive material to deionized water under stirring to achive even dispersing, to obtain conductive slurry; and step (12), adding the polymer slowly into the conductive slurry obtained in step (11) under stirring to achive even dispersing, to obtain the first slurry.

Optionally, the solid content of the conductive slurry obtained in step (11) is from 0.8% to 10%.

Optionally, in step (11), the stirring and dispersion speed is between 200 rpm and 600 rpm, and the dispersion time is between 20 min and 60 min.

Optionally, in step (12), the stirring and dispersion speed is between 200 rpm and 600 rpm, and the dispersion time is between 20 min and 60 min.

### Negative electrode plate

The second aspect according to the present application provides a negative electrode plate, comprsing the silicon-containing negative electrode active material according to the first aspect of the present application.

The silicon-containing negative electrode active material according to the first aspect of the implementation method of the present application have good electronic conductivity and small volume expansion effect, and simultaneously have high reversible capacity and first coulombic efficiency, and it still have good electronic conductivity after being prepared into a negative electrode. Therefore, the negative electrode of the present application have good electronic conductivity and high capacity, and simultaneously have first coulombic efficiency and small volume expansion.

In some embodiments, the negative electrode plate comprises a negative current collector and a negative electrode film layer located on at least one surface of the negative current collector, wherein the negative electrode film layer comprises a silicon-containing negative electrode active material, a conductive agent, and an binder according to the first aspect of the present application. For example, the negative electrode current collector has two opposite surfaces in the thickness direction thereof, and the negative electrode film layer is arranged on either or both of the two opposite surfaces of the negative electrode current collector.

In some embodiments, based on the total mass of the negative electrode film layer, the mass percentage content of the silicon-containing negative electrode active material is from 5% to 40%, optionally from 5% to 25%.

In some embodiments, the negative electrode film layer, in addition to the silicon-containing negative electrode active material as mentioned above, may comprise other negative electrode active materials commonly known in the art for secondary batteries, such as graphite (natural graphite, artificial graphite or a mixture thereof), soft carbon, hard carbon, or lithium titanate. Optionally, the other negative electrode active material includes graphite. In some embodiments, based on the total mass of the negative electrode film layer, the mass percentage content of the graphite is from 55% to 90%, optionally from 70% to 90%.

The negative electrode plate according to the present application has no particular limitation to the type of conductive agent. As an example, the conductive agent may include at least one selected from superconducting carbon, conductive graphite, acetylene black, carbon black, Koqin black, carbon dots, carbon nanotubes, graphene, and carbon nanofibers. In some embodiments, based on the total mass of the negative electrode film layer, the mass percentage content of the conductive agent is below 5%, optionally ranging from 0.1% to 5%.

The negative electrode plate according to the application has has no particular limitation to the type of the binder. As an example, the binder may include at least one selected from styrene butadiene rubber (SBR), water-soluble unsaturated resin SR-1B, water-borne acrylic resin (such as polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, based on the total mass of the negative electrode film layer, the mass percentage content of the binder is below 5%, optionally ranging from 0.1% to 5%.

In some embodiments, the negative electrode film layer may optionally include other additives. As an example, other additives may include thickeners such as carboxymethyl cellulose sodium (CMC Na), PTC thermistor materials, etc. In some embodiments, based on the total mass of the negative electrode film layer, the mass percentage of the other additives is below 2%, optionally ranging from 0.1% to 2%.

In some embodiments, the negative electrode current collector can be used in the form of a metal foil or a composite current collector. As an example of the metal foil, a copper foil can be used. The composite current collector may comprise a polymer material base layer and a metal material layer formed on at least one surface of the polymer material base layer. As an example, the metal material may be at least one selected from copper, copper alloy, nickel, nickel alloy, titanium, titanium alloy, silver, and silver alloy. As an example, the polymer material base layer may be selected from polypropylene (PP), polyethylene terephthalate (PET), polybutylene terephthalate (PBT), polystyrene (PS), polyethylene (PE) and the like.

The negative electrode film layer is usually formed by coating the negative electrode slurry on the negative electrode current collector, drying, and cold pressing. The negative electrode slurry is usually formed by dispersing the negative electrode active material, conductive agent, binder, and other optional additives in a solvent and stirring evenly. The solvent can be N-methylpyrrolidone (NMP) or deionized water, but is not limited thereto.

The negative electrode plate does not exclude other additional functional layers besides the negative electrode film layer. For example, in certain embodiments, the negative electrode plate described according to the present application further includes a conductive primer layer sandwiched between the negative electrode current collector and the negative electrode film layer, arranged on the surface of the negative electrode current collector (for example, composed of a conductive agent and an binder). In other embodiments, the negative electrode plate described according to the present application also includes a protective layer covering the surface of the negative electrode film layer.

### Secondary battery

The third aspect according to the present application provides a secondary battery, including the silicon-containing negative electrode active material according to the first aspect of the present application or the negative electrode plate according to the second aspect of the present application. Therefore, the secondary battery of the present application have high energy density, good cycling performance, and storage performance simultaneously.

Secondary batteries, also known as rechargeable batteries or storage batteries, refer to batteries that can activate active materials through charging and to be used continuously after discharging. Normally, a secondary battery comprises an electrode assembly and an electrolyte, wherein the electrode assembly includes a positive electrode plate, a negative electrode plate, and an seperator. The seperator is arranged between the positive and negative electrode plates, mainly to prevent short circuits between the positive and negative electrodes, and to allow active ions to pass through. The electrolyte has a function of conducting active ions between the positive and negative electrode plates.

### [Negative electrode plate]

The negative electrode used in the secondary battery according to the present application is the negative electrode as described in any embodiment according to the second aspect of the present application.

### [Positive electrode plate]

In some embodiments, the positive electrode plate comprises a positive current collector and a positive electrode film layer arranged on at least one surface of the positive current collector and comprising a positive electrode active material. For example, the positive electrode current collector has two opposite surfaces in the thickness direction thereof, and the positive electrode film layer is arranged on either or both of the two opposite surfaces of the positive electrode current collector.

The positive electrode film layer includes a positive electrode active material commonly known in the art of secondary batteries. For example, the positive electrode active material may include at least one selected from lithium transition metal oxides, lithium-containing phosphates having an olivine structure, and the modified compounds thereof. Examples of lithium transition metal oxides may include at least one selected from lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of lithium containing phosphates having an olivine structure can include at least one selected from lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and the modified compounds thereof. According to the present application, the positive electrode active material is not limited to those materials, and may include other traditional materials well-known in the art. These positive electrode active materials may be used alone or in combination with two or more than two.

In some embodiments, in order to further improve the energy density of the secondary battery, the positive electrode active material may include one or several lithium transition metal oxides and the modified compounds thereof as shown in Formula 1,

LiₐNi_{b}Co_{c}M_{d}OₑA_{f} Formula 1,

in Formula 1, 0.8 ≤ a ≤ 1.2, 0.5≤ b<1, 0<c<1, 0<d<1, 1≤e≤2, and 0 ≤ f ≤ 1; M is one or more selected from Mn, Al, Zr, Zn, Cu, Cr, Mg, Fe, V, Ti, and B, and A is one or more selected from N, F, S, and Cl.

According to the present application, the modified compounds of the above-mentioned positive electrode active materials may be modified simultaneously by doping, surface coating, or doping surface coating.

In some embodiments, the positive electrode film layer may also optionally include a conductive agent. There are no special restrictions on the types of conductive agents according to the present application. As an example, the conductive agent includes at least one selected from superconducting carbon, conductive graphite, acetylene black, carbon black, Koqin black, carbon dots, carbon nanotubes, graphene, and carbon nanofibers. In some embodiments, based on the total mass of the positive electrode film layer, the mass percentage content of the conductive agent is below 5%, optionally ranging from 0.1% to 5%.

In some embodiments, the positive electrode film may further optionally include a binder. Non-limiting examples of the binder that can be used in the positive electrode film may include one or more of the following: polyvinylidene fluoride (PVDF), polytetrafluoroethylene (PTFE), vinylidene fluoride-tetrafluoroethylene-propylene copolymer, vinylidene fluoride-hexafluoropropylene-tetrafluoroethylene terpolymer, tetrafluoroethylene-hexafluoropropylene copolymer and fluorinated acrylate resin. In some embodiments, based on the total mass of the positive electrode film layer, the mass percentage content of the binder is below 5%, optionally ranging from 0.1% to 5%.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. As an example, metal materials can be at least one selected from aluminum, aluminum alloy, nickel, nickel alloy, titanium, titanium alloy, silver, and silver alloy. As an example, the polymer material base can be selected from polypropylene (PP), polyethylene terephthalate (PET), polybutylene terephthalate (PBT), polystyrene (PS), polyethylene (PE), etc.

The positive electrode film layer is usually formed by coating the positive electrode slurry on the positive electrode current collector, drying, and cold pressing. The positive electrode slurry is usually formed by dispersing the positive electrode active material, optional conductive agent, optional binder, and any other components in a solvent under evenly stirring. The solvent may be N-methylpyrrolidone (NMP), but is not limited thereto.

### [Electrolyte]

According to the present application, the type of electrolyte is not specifically limited, and may be selected according to requirements. For example, the electrolyte may be at least one selected from solid electrolytes and liquid electrolytes (i.e., electrolytic solution).

In some embodiments, the electrolyte is used in the form of an electrolytic solution. The electrolytic solution comprises an electrolyte salt and a solvent.

In some embodiments, the type of electrolyte salt is not specifically limited, and can be selected according to actual needs. In some embodiments, the electrolyte salt may include at least one selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium difluorobisoxalate phosphate (LiDFOP) and lithium tetrafluorooxalate phosphate (LiTFOP).

In some embodiments, the type of solvent is not specifically limited, and can be selected according to actual needs. In some embodiments, the solvent may include at least one selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA)), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may optionally comprise additives. For example, the additives may include negative electrode film-forming additives, positive electrode film-forming additives, and may further include those additives that can improve certain performance of batteries, such as those additives to improve battery overcharge performance, those additives to improve battery high temperature performance, and those additives to improve battery low temperature podwer performance and the like.

### [Separator]

In secondary batteries using an electrolytic solution and some secondary batteries using a solid electrolyte, a separator is also included. The separator is arranged between the positive electrode plate and the negative electrode plate, which mainly functions as preventing short circuit of the positive and negative electrodes while allowing active ions to pass through. There is no particular limitation on the type of separator in the present application, and any well-known porous-structure separator with good chemical stability and mechanical stability can be selected.

In some embodiments, materials of the separator can be at least one selected from glass fibers, non-woven fabrics, polyethylene, polypropylene and polyvinylidene fluoride. The separator can be a single-layer film or a multi-layer composite film. When the separator is a multi-layer composite film, materials of each layer can be the same or different.

In some embodiments, the positive electrode sheet, the seperator, and the negative electrode plate can be made into an electrode assembly through a winding process or a lamination process.

In some embodiments, the secondary battery may include an outer packaging. The outer packaging can be used to encapsulate the electrode components and electrolytes as mentioned above.

In some embodiments, the outer packaging of the secondary battery can be a hard shell, such as a hard plastic shell, aluminum shell, steel shell, etc. The outer packaging of the secondary battery can be a soft bag, such as a bag type soft bag. The material of the soft bag can be plastic, such as at least one of polypropylene (PP), polybutylene terephthalate (PBT), polybutylene succinate (PBS), etc.

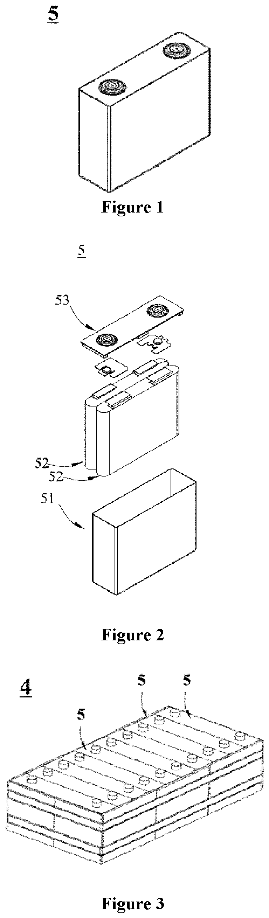

The shape of secondary batteries is not particularly limited according to the present application, and can be cylindrical, square, or any other shapes. Figure 1 shows a square structured secondary battery 5 as an example.

In some embodiments, as shown in Figure 2, the outer packaging may include a shell 51 and a cover plate 53. The shell 51 can include a bottom plate and a side plate connected to the bottom plate, and the bottom plate and side plate are enclosed to form a housing chamber. The housing 51 has an opening connected to the containing cavity, and the cover plate 53 is used to cover the opening to close the containing cavity. The positive electrode plate, negative electrode plate, and seperator can be formed into an electrode assembly 52 through winding or stacking processes. The electrode assembly 52 is encapsulated in the accommodating cavity. The electrolyte is immersed in electrode assembly 52. The number of electrode components 52 contained in secondary battery 5 can be one or several, and can be adjusted according to requirments.

The method for preparing the secondary battery according to the present application is well-known. In some embodiments, the positive electrode plate, seperator, negative electrode plate, and electrolyte can be assembled to form a secondary battery. As an example, the positive electrode plate, seperator, and negative electrode plate can be formed into an electrode assembly through winding or stacking processes. The electrode assembly is placed in an outer packaging, dried, and then injected with electrolyte. After vacuum packaging, standing, formation, shaping, and other processes, a secondary battery can be obtained.

In some embodiments of the present application, the secondary battery according to the present application can be assembled into a battery module, the number of secondary batteries contained in the battery module can be multiple, and the specific number can be adjusted according to the application and capacity of the battery module.

Figure 3 is a schematic diagram of the battery module 4 as an example. As shown in Figure 3, in the battery module 4, a plurality of secondary batteries 5 may be arranged in sequence along the longitudinal direction of the battery module 4. Of course, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments of the present application, the above-mentioned battery modules can also be assembled into a battery pack, and the number of battery modules included in the battery pack can be adjusted according to the application and capacity of the battery pack.

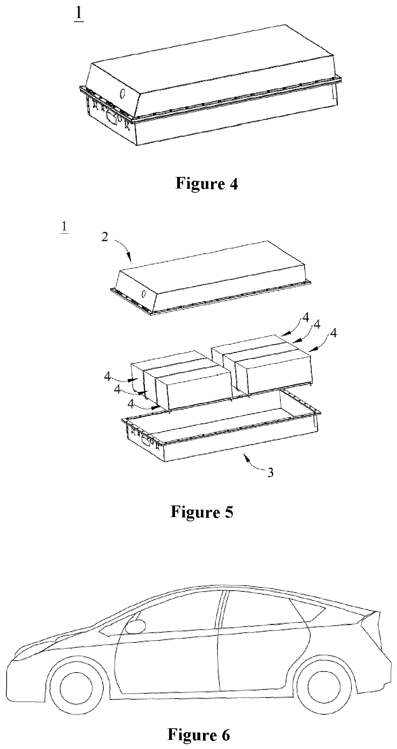

Figures 4 and 5 are schematic diagrams of the battery pack 1 as an example. As shown in F igures 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

Embodiments according to the four aspect of the present application also provide an electrical device comprising at least one of the secondary battery, battery module, or battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Figure 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are obvious to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1

### Preparation of Silicon-containing Negative Electrode Active Materials

Adding a carbon nanotubes (CNTs, one-dimension conductive materials) having diameter of 3 nm, a length of 10 µm, and a aspect ratio of 3333 into deionized water and stirring for dispersing at a speed of 300 rpm for 30 minutes, to obtain a conductive slurry; adding an ethylene-acrylic acid copolymer (polymer) having a weight average molecular weight of 300,000 and a polar functional group(s) (carboxylic acid group in Example 1) in an mass content of 25% slowly into the conductive slurry and stirring for dispersion at a speed of 300 rpm for 30 minutes, to obtain the first slurry; adding a silicon oxide (silicon-based material) having a silicon mass content of 48% slowly into the first slurry, stirring for dispersing at 500 rpm for 1h, to obtain a second slurry; and then spray drying the second slurry under 180°C, to obtain a silicon-containing negative active material, whrein the silicon-containing negative electrode active materials has a mass ratio of silicon oxide, polymer, to one-dimension conductive material of 96.6:3.0:0.4.

### Preparation of negative electrode plate

Stirring and mixing the silicon-containing negative electrode active material, graphite, styrene butadiene rubber (SBR), sodium carboxymethyl cellulose (CMC Na), and carbon black (Super P), in a mass ratio of 81.3:14.3:2:1.2:1.2, in an appropriate amount of solvent deionized water,to form a uniform negative electrode slurry; and applying the negative electrode slurry evenly on the surface of the negative electrode current collector copper foil, drying and cold pressing, to obtain the negative electrode plate.

### Preparation of positive electrode plate

Mixing the positive electrode active material LiNi_{0.8}Co_{0.1}Mn_{0.1}O₂ (NCM811), conductive carbon black (Super P), and binder polyvinylidene fluoride (PVDF), at a mass ratio of 97:1:2, in an appropriate amount of solvent NMP, to form a uniform positive electrode slurry; and applying the positive electrode slurry evenly on the surface of the positive electrode current collector aluminum foil, drying and cold pressing, to obtain the positive electrode plate.

### Preparation of electrolyte

Mixing ethyl carbonate (EC), methyl ethyl carbonate (EMC), and diethyl carbonate (DEC) in a volume ratio of 1:1:1 to obtain an organic solvent, and then dissolving thoroughly dried LiPF₆ into the aforementioned organic solvent to prepare an electrolyte having a concentration of 1mol/L.

### Preparation of seperator

Porous polyethylene film is used as the seperator.

### Preparation of secondary batteries

Stacking and coiling the positive electrode plates, seperator, and negative electrode plates in order to obtain the electrode assembly; placing the electrode assembly into a outer packaging, drying, and injecting electrolyte; after vacuum encapsulating, standing, formation, shaping, etc., to obtain a secondary battery.

### Examples 2-8 and Comparative Examples 1-4

The secondary battery is prepared according to Example 1, except that the preparation parameters of the silicon-containing negative electrode active material as detailed in Table 1 are used.

**Table 1**

| Serial number | Silicon-based materials | | | Polymer | | | | One-dimension conductive material | | | | | A2/ A1 | B1/B2 | W21 W3 |
|---|---|---|---|---|---|---|---|---|---|---|---|---|---|---|---|
| | Type | Mass content of silicon A2 | W1 | Type | Weight average molecular weight B 1 | Mass percentag e of polar functional group(s) A1 | W2 | Type | Diame ter (nm) | Lengt h (µm) | Aspect ratio B2 | W3 | | | |
| Example 1 | Silicon oxide | 48% | 96.6% | Ethylene acrylic acid copolymer | 300000 | 25% | 3% | CNT | 3 | 10 | 3333 | 0.4% | 1.9 | 90 | 7.5 |
| Example 2 | Silicon oxide | 48% | 96.6% | Ethylene acrylic acid copolymer | 300000 | 22.5% | 3% | CNT | 3 | 10 | 3333 | 0.4% | 2.1 | 90 | 7.5 |
| Example 3 | Silicon oxide | 48% | 96.6% | Ethylene acrylic acid copolymer | 300000 | 19% | 3% | CNT | 3 | 10 | 3333 | 0.4% | 2.5 | 90 | 7.5 |
| Example 4 | Silicon oxide | 48% | 96.6% | Ethylene acrylic acid copolymer | 300000 | 12% | 3% | CNT | 3 | 10 | 3333 | 0.4% | 4.0 | 90 | 7.5 |
| Example 5 | Silicon oxide | 48% | 96.6% | Ethylene acrylic acid copolymer | 300000 | 8% | 3% | CNT | 3 | 10 | 3333 | 0.4% | 6.0 | 90 | 7.5 |
| Example 6 | Silicon oxide | 48% | 96.6% | Ethylene acrylic acid copolymer | 300000 | 6% | 3% | CNT | 3 | 10 | 3333 | 0.4% | 8.0 | 90 | 7.5 |
| Example 7 | Silicon oxide | 48% | 96.6% | Ethylene acrylic acid copolymer | 300000 | 30% | 3% | CNT | 3 | 10 | 3333 | 0.4% | 1.6 | 90 | 7.5 |
| Example 8 | Silicon oxide | 48% | 96.6% | Ethylene acrylic acid copolymer | 300000 | 50% | 3% | CNT | 3 | 10 | 3333 | 0.4% | 1.0 | 90 | 7.5 |
| Example 9 | Silicon oxide | 48% | 96.6% | Ethylene acrylic acid copolymer | 300000 | 75% | 3% | CNT | 3 | 10 | 3333 | 0.4% | 0.6 | 90 | 7.5 |
| Example 10 | Silicon oxide | 48% | 96.6% | Ethylene acrylic acid copolymer | 300000 | 90% | 3% | CNT | 3 | 10 | 3333 | 0.4% | 0.5 | 90 | 7.5 |
| Example 11 | Silicon oxide | 48% | 96.6% | Ethylene acrylic acid copolymer | 300000 | 95% | 3% | CNT | 3 | 10 | 3333 | 0.4% | 0.5 | 90 | 7.5 |
| Example 12 | Silicon carbon compound | 10% | 96.6% | Ethylene acrylic acid copolymer | 300000 | 5% | 3% | CNT | 3 | 10 | 3333 | 0.4% | 2.0 | 90 | 7.5 |
| Example 13 | Silicon carbon compound | 10% | 96.6% | Ethylene acrylic acid copolymer | 300000 | 10% | 3% | CNT | 3 | 10 | 3333 | 0.4% | 1.0 | 90 | 7.5 |
| Example 14 | Silicon carbon compound | 10% | 96.6% | Ethylene acrylic acid copolymer | 300000 | 20% | 3% | CNT | 3 | 10 | 3333 | 0.4% | 0.5 | 90 | 7.5 |
| Example 15 | Silicon oxide | 48% | 96.6% | Ethylene acrylic acid copolymer | 100000 | 25% | 3% | CNT | 5 | 0.5 | 100 | 0.4% | 1.9 | 1000 | 7.5 |
| Example 16 | Silicon oxide | 48% | 96.6% | Ethylene acrylic acid copolymer | 100000 | 25% | 3% | CNT | 1 | 1 | 1000 | 0.4% | 1.9 | 100 | 7.5 |
| Example 17 | Silicon oxide | 48% | 96.6% | Ethylene acrylic acid copolymer | 100000 | 25% | 3% | CNT | 1 | 2 | 2000 | 0.4% | 1.9 | 50 | 7.5 |
| Example 18 | Silicon oxide | 48% | 96.6% | Ethylene acrylic acid copolymer | 100000 | 25% | 3% | CNT | 1 | 5 | 5000 | 0.4% | 1.9 | 20 | 7.5 |
| Example 19 | Silicon oxide | 48% | 96.6% | Ethylene acrylic acid copolymer | 100000 | 25% | 3% | CNT | 1 | 10 | 10000 | 0.4% | 1.9 | 10 | 7.5 |
| Example 20 | Silicon oxide | 48% | 96.6% | Ethylene acrylic acid copolymer | 100000 | 25% | 3% | CNT | 1 | 20 | 20000 | 0.4% | 1.9 | 5 | 7.5 |
| Example 21 | Silicon oxide | 48% | 96.6% | Ethylene acrylic acid copolymer | 100000 | 25% | 3% | CNT | 1 | 0.05 | 50 | 0.4% | 1.9 | 2000 | 7.5 |
| Example 22 | Silicon oxide | 48% | 96.6% | Ethylene acrylic acid copolymer | 100000 | 25% | 3% | CNT | 1 | 30 | 30000 | 0.4% | 1.9 | 3 | 7.5 |
| Example 23 | Silicon oxide | 48% | 96.6% | Ethylene acrylic acid copolymer | 100000 | 25% | 3% | CNT | 0.5 | 2.5 | 5000 | 0.4% | 1.9 | 20 | 7.5 |
| Example 24 | Silicon oxide | 48% | 96.6% | Ethylene acrylic acid copolymer | 100000 | 25% | 3% | CNT | 40 | 20 | 500 | 0.4% | 1.9 | 200 | 7.5 |
| Example 25 | Silicon oxide | 48% | 90% | Ethylene acrylic acid copolymer | 500000 | 25% | 9% | CNT | 1 | 10 | 10000 | 1% | 1.9 | 50 | 9.0 |
| Example 26 | Silicon oxide | 48% | 91.6% | Ethylene acrylic acid copolymer | 500000 | 25% | 8% | CNT | 1 | 10 | 10000 | 0.4% | 1.9 | 50 | 20.0 |
| Example 27 | Silicon oxide | 48% | 94% | Ethylene acrylic acid copolymer | 500000 | 25% | 5.6% | CNT | 1 | 10 | 10000 | 0.4% | 1.9 | 50 | 14.0 |
| Example 28 | Silicon oxide | 48% | 96% | Ethylene acrylic acid copolymer | 500000 | 25% | 3.5% | CNT | 1 | 10 | 10000 | 0.5% | 1.9 | 50 | 7.0 |
| Example 29 | Silicon oxide | 48% | 98% | Ethylene acrylic acid copolymer | 500000 | 25% | 1.8% | CNT | 1 | 10 | 10000 | 0.2% | 1.9 | 50 | 9.0 |
| Example 30 | Silicon oxide | 48% | 94% | Ethylene acrylic acid copolymer | 500000 | 25% | 5.8% | CNT | 1 | 10 | 10000 | 0.2% | 1.9 | 50 | 29.0 |
| Example 31 | Silicon oxide | 48% | 94% | Ethylene acrylic acid copolymer | 500000 | 25% | 5% | CNT | 1 | 10 | 10000 | 1% | 1.9 | 50 | 5.0 |
| Example 32 | Silicon oxide | 48% | 96.6% | Ethylene vinyl alcohol copolymer | 300000 | 25% | 3% | CNT | 3 | 10 | 3333 | 0.4% | 1.9 | 90 | 7.5 |
| Example 33 | Silicon oxide | 48% | 96.6% | Acrylic acid acrylate copolymer | 300000 | 25% | 3% | CNT | 3 | 10 | 3333 | 0.4% | 1.9 | 90 | 7.5 |
| Example 34 | Silicon oxide | 48% | 96.6% | Sodium alginate | 300000 | 25% | 3% | CNT | 3 | 10 | 3333 | 0.4% | 1.9 | 90 | 7.5 |
| Example 35 | Silicon oxide | 48% | 96.6% | Sodium Hydroxymethyl Cellulose | 300000 | 25% | 3% | CNT | 3 | 10 | 3333 | 0.4% | 1.9 | 90 | 7.5 |
| Example 36 | Lithium doped silicon | 50% | 96.6% | Ethylene acrylic acid copolymer | 300000 | 25% | 3% | CNT | 3 | 10 | 3333 | 0.4% | 2.0 | 90 | 7.5 |
| Example 37 | Magnesium doped silicon | 50% | 96.6% | Ethylene acrylic acid copolymer | 300000 | 25% | 3% | CNT | 3 | 10 | 3333 | 0.4% | 2.0 | 90 | 7.5 |
| Example 38 | Silicon carbon compound | 50% | 96.6% | Ethylene acrylic acid copolymer | 300000 | 25% | 3% | CNT | 3 | 10 | 3333 | 0.4% | 2.0 | 90 | 7.5 |
| Compartiv e Example 1 | Silicon oxide | 48% | 100% | / | / | / | / | / | / | / | / | / | / | / | / |
| Compartiv e Example 2 | Silicon oxide | 48% | 99.6% | / | / | / | / | CNT | 3 | 10 | 3333 | 0.4% | / | / | / |
| Compartiv e Example 3 | Silicon oxide | 48% | 96.6% | Ethylene acrylic acid copolymer | 300000 | 5% | 3% | CNT | 3 | 10 | 3333 | 0.4% | 9.6 | 90 | 7.5 |
| Compartiv e Example 4 | Silicon carbon compound | 10% | 96.6% | Ethylene acrylic acid copolymer | 300000 | 85% | 3% | CNT | 3 | 10 | 3333 | 0.4% | 0.12 | 90 | 7.5 |

### (1) Powder resistivity testing of silicon-containing negative electrode active materials

Referring to GB/T 30835-2014, the powder resistivity of the silicon-containing negative electrode active material as prepared above was measured using the FT-341A four probe method powder resistivity tester. The quality of the test sample is from 0.6g to 0.7g, and the test pressure is 16Mpa.

### (2) Test of initial reversible capacity pergram and intial coulombic efficiency

Punching and cutting the above prepared negative electrode into small circular plates; and then assembling into a CR2430 button type battery in glove box under argon protection, with a metal lithium plate being the counter electrode and polyethylene (PE) film being the separator; letting it stand for 12 hours and then discharging the obtained button battery at a constant current of 0.05C to 0.005V at 25°C; letting it stand for 10 minutes and then discharging at a constant current of 50 µA to 0.005V; and letting it stand for 10 minutes and then dischargint at a constant current of 10 µA to 0.005V; recording the total capacity of the three times discharging, to obtain the initial discharging capacity of the button battery; and then charginge button battery at a constant current of 0.1C to 2V, and recording initial charging capacity of the button battery.

The inital reversible capacity pergram of the negative electrode plate (mAh/g) = the inital charging capacity of the button battery/(mass of silicon-containing negative electrode active material+mass of graphite).

The inital coulombic efficiency of the negative electrode plate = (the inital charging capacity of the button battery/the inital discharging capacity of the button battery) × 100%_{∘}

### (3) Test of volume expansion performance

Discharging the secondary battery at a constant current of 1C to 2.5V at 25 °C, and then charging at a constant current of 0.5C to 4.25V, to obtain 100% SOC of the secondary battery. Disassembling the secondary battery, recording the thickness of the negative electrode plate as H₁, th thickness growth rate of negative electrode plate (%)=(H₁/H₀-1) × 100%, whrein record H₀ is the initial thickness of the negative electrode plate.

The volume expansion of the negative electrode and secondary battery can be characterized by the thickness growth rate of the negative electrode. The smaller the thickness growth rate of the negative electrode, the smaller the volume expansion of the negative electrode and secondary battery.
Table 2 presents the test results for embodiments 1 to 38 and for ratios 1 to 4.

**Table 2**

| Serial number | Powder resistivity (Ω-cm) | Initial reversible capacity pergram (mAh/g) | Innitial coulombic efficiency | Thickness growth rate |
|---|---|---|---|---|
| Example 1 | 0.734 | 500.4 | 92.5% | 32.6% |
| Example 2 | 0.727 | 500.1 | 92.7% | 32.8% |
| Example 3 | 0.737 | 499.7 | 92.4% | 32.9% |
| Example 4 | 0.801 | 498.5 | 92.2% | 33.2% |
| Example 5 | 0.818 | 493.7 | 92% | 33.4% |
| Example 6 | 0.838 | 490.4 | 92.1% | 33.7% |
| Example 7 | 0.743 | 500.0 | 91.9% | 33.1% |
| Example 8 | 0.758 | 497.6 | 91.8% | 32.9% |
| Example 9 | 0.784 | 495.5 | 90.9% | 33.6% |
| Example 10 | 0.827 | 492.1 | 90.2% | 34% |
| Example 11 | 0.844 | 486.9 | 89.2% | 34.5% |
| Example 12 | 0.727 | 495.7 | 90.2% | 34.3% |
| Example 13 | 0.715 | 499.1 | 91.7% | 33.7% |
| Example 14 | 0.710 | 491.5 | 92.4% | 32.2% |
| Example 15 | 0.758 | 476.9 | 90.7% | 33.5% |
| Example 16 | 0.743 | 492.4 | 91.8% | 33.1% |
| Example 17 | 0.742 | 497.8 | 92.7% | 32.1% |
| Example 18 | 0.733 | 499.5 | 92.8% | 31.6% |
| Example 19 | 0.780 | 493.7 | 91.6% | 32.8% |
| Example 20 | 0.802 | 490.6 | 90.9% | 34.4% |
| Example 21 | 0.835 | 463.3 | 87.7% | 35.1% |
| Example 22 | 0.858 | 456.7 | 88.1% | 36.2% |
| Example 23 | 0.889 | 448.2 | 87.3% | 35.8% |
| Example 24 | 0.855 | 453.7 | 87% | 36.8% |
| Example 25 | 0.721 | 493.1 | 91.4% | 32.4% |
| Example 26 | 0.755 | 496.8 | 92.5% | 33.6% |
| Example 27 | 0.764 | 498.6 | 92.8% | 32.9% |
| Example 28 | 0.740 | 492.5 | 90.9% | 33.3% |
| Example 29 | 0.782 | 490.1 | 90.6% | 32.8% |
| Example 30 | 0.875 | 484.2 | 88.1% | 35.2% |
| Example 31 | 0.750 | 488.7 | 88.3% | 34.8% |
| Example 32 | 0.711 | 493.5 | 92.5% | 31.6% |
| Example 33 | 0.725 | 499.4 | 91.3% | 32.6% |
| Example 34 | 0.724 | 491.6 | 93.7% | 31.8% |
| Example 35 | 0.738 | 496.3 | 92.9% | 31.3% |
| Example 36 | 0.721 | 497.6 | 91.8% | 31.3% |
| Example 37 | 0.735 | 497.8 | 92.8% | 31.4% |
| Example 38 | 0.724 | 498.4 | 90.2% | 32.4% |
| Comparative Example 1 | 0.978 | 424.8 | 83.2% | 38.7% |
| Comparative Example 2 | 0.963 | 426.1 | 85.2% | 40.5% |
| Comparative Example 3 | 0.934 | 429.8 | 86.5% | 37.2% |
| Comparative Example 4 | 0.901 | 430.5 | 85.4% | 38.5% |

From the test results as shown in Table 2, it can be seen that as compared with Comparative Example 1, the silicon-containing negative electrode active material provided according to the present application has lower powder resistivity, and the negative electrode plate has higher reversible capacity pergram and initial Coulombic efficiency, and smaller volume expansion. The possible reason is that an appropriate amount of hydrogen bonding could be formed between the polar functional group(s) in the polymer and the functional groups on the surface of one-dimension conductive materials, and between the polar functional group(s) in the polymer and the functional groups on the surface of silicon-based materials; accordingly the one-dimension conductive materials effectively fix on the surface of silicon-based materials. Moreover, polymers and one-dimension conductive materials could crosslink and entangle with each other, making the conductive layer flexible and firmly covering the surface of silicon-based materials like a fish-net. Therefore, the silicon-containing negative electrode active material according to the present application has good electronic conductivity and small volume expansion effect, and simultaneously high reversible capacity pergram and initial coulombic efficiency, and has good electronic conductivity after being applied to negative electrode plates.

When preparing the silicon-containing negative electrode active materials of Compartive Example 2, the carbon nanotube dispersion solution is mixed with silicon oxide and then is dried. In this case, the binding between carbon nanotubes and silicon oxide is not strong. During the slurry stirring dispersion, carbon nanotubes are prone to shed, resulting in a lack of significant improvement in the electronic conductivity, reversible capacity pergram, and initial coulombic efficiency of silicon-containing negative electrode active materials. Accordingly, their volume expansion is still high.

From the test results of Examples 1-11 and Compartive Example 3, Examples 12 14 and Compartive Example 4, it can be seen that when A2/A1 is controlled within an appropriate range (between 0.2 and 8), the silicon-containing negative electrode active material has lower powder resistivity, higher reversible capacity pergram, higher initial Coulombic efficiency, and smaller volume expansion. In Compartive Example 3, A2/A1 is greater than 8, thus the polymer can only bond with the silicon-based material in the longitudinal direction of the silicon-containing negative electrode active material through hydrogen bonding, but cannot achieve good coating effect in the transverse direction of the silicon-containing negative electrode active material. Accordingly, the bonding between carbon nanotubes and silicon oxide is not strong, and carbon nanotubes are prone to shed during the slurry stirring dispersion process. As a result, the improvement in reversible capacity pergram and initial coulombic efficiency of the negative electrode is insignificant; moreover, the volume expansion is still relatively high. In Compartive Example 4, A2/A1 is less than 0.2, thus the polar functional group(s) in the polymer will form hydrogen bonds with the functional groups on the surface of carbon nanotubes, leading to cross-linking reactions or entanglement. Nevertheless, fewer polar functional group(s) form hydrogen bonds with the functional groups on the surface of silicon carbon compounds. Accordingly, the binding between carbon nanotubes and silicon carbon compounds is not strong. During the slurry stirring dispersion, carbon nanotubes are prone to shed, resulting in insignificant improvement in the reversible capacity pergram and initial culombic efficiency of the negative electrode plate; moreover, their volume expansion is still relatively high.

From the test results of Examples 1 to 11, it can be seen that when the content of polar functional group(s) in the polymer falls within an appropriate range, the reversible capacity pergram and initial coulombic efficiency of the negative electrode plate are higher, but the volume expansion is smaller.

From the test results of Examples 15-24, it can be seen that when raito(s) of the aspect of carbon nanotubes and/or the weight average molecular weight of polymers to the aspect of carbon nanotubes fall within an appropriate range, the reversible capacity pergram and initial coulombic efficiency of the negative electrode plate are higher, but the volume expansion is still smaller.

From the test results of Examples 25-31, it can be seen that when the mass percentage of the polymer to carbon nanotubes falls within an appropriate range, the reversible capacity pergram and initial coulombic efficiency of the negative electrode plate are higher, but the volume expansion is still smaller.

It should be noted that the above embodiments are only used to illustrate the technical solutions of the present application, rather than limiting the present application. Although the present application has been described in detail with reference to the foregoing embodiments, those of ordinary skill in the art should understood that modifications can still be made to the technical solutions recorded in the foregoing embodiments, or equivalent replacements are made to some or all of the technical features; and these modifications or replacements do not make the essence of the corresponding technical solutions deviate from the scope of the technical solutions of the embodiments of the present application.

## Claims

1. A silicon-containing negative electrode active material, comprising
a silicon-based material and
a conductive layer, located on the surface of the silicon-based material, comprising a polymer and a one-dimension conductive material,
wherein,
the polymer comprises polar functional group(s) comprising one or more selected form carboxylic acid group, hydroxyl group, amide grous, amino group, carbonyl group, and nitro group; and
the polar functional group(s) in the polymer have a mass percentage content as A1, and silicon in the silicon-based material has a mass percentage content as A2, the silicon-containing negative electrode active material satisfies: A2 is from 5% to 100% and A2/A1 is from 0.2 to 8.

2. The silicon-containing negative electrode active material according to claim 1, wherein A2 is from 10% to 80% and A2/A1 is from 0.6 to 2.5.

3. The silicon-containing negative electrode active material according to claim 1 or 2, wherein A1 is from 5% to 90%, and optionally from 10% to 75%.

4. The silicon-containing negative electrode active material according to any of claims 1-3, wherein the polymer has a weight average molecular weight as B1, with B1 higer than 100,000, optionally from 200,000 to 100,000,000.

5. The silicon-containing negative electrode active material according to any of claims 1-4, wherein the one-dimension conductive material has an aspect ratio as B2, with B2 ranging from 100 to 20,000, and optionally from 2,000 to 20,000.

6. The silicon-containing negative electrode active material according to claim 5, wherein B1/B2 is from 5 to 200, and optionally from 5 to 50.

7. The silicon-containing negative electrode active material according to claim 5, wherein,
the one-dimension conductive material has a diameter of from 1nm to 30nm; and/or,
the one-dimension conductive material has a length of from 0.5 µm to 20 µm_{∘}

8. The silicon-containing negative electrode active material according to any of claims 1-7, wherein,
the polymer has a glass transition temperature of below 150°C, optionally from -10°C to 120°C; and/or,
the polymer has a crystallinity of below 80%, optionally from 10% to 70%.

9. The silicon-containing negative electrode active material according to claim 8, wherein the polymer comprises one or more selected from (methyl) acrylic acid and the salt homopolymer or copolymer thereof, hydroxymethylcellulose and the salt homopolymer or copolymer thereof, alginic acid and the salt homopolymer or copolymer thereof, polyacetamide homopolymer or copolymer, acrylamide homopolymer or copolymer, and ethylene alcohol homopolymer or copolymer.

10. The silicon-containing negative electrode active material according to any of claims 1-9, wherein the one-dimension conductive material comprises carbon nanotubes, and optionally, the carbon nanotubes satisfy at least one of the following conditions (1) to (3):
(1) the carbon nanotubes have a carbon content of above 90%;
(2) the carbon nanotubes have a I_{g}/I_{d} of above 40, where I_{g} represents the peak intensity of the carbon nanotubes in the range of 1500 cm⁻¹ to 1650 cm⁻¹ in the Raman spectrum, and I_{d} represents the peak intensity of the carbon nanotubes in the range of 100 cm⁻¹ to 200 cm⁻¹ in the Raman spectrum;
(3) the carbon nanotubes have a specific surface area of above 500 m²/g.

11. The silicon-containing negative electrode active material according to any of claims 1-10, wherein the silicon-based material comprises one or more elements selected from elemental silicon, silicon oxide, silicon carbon compound, and silicon alloy, and optionally, the silicon-based material is doped with one or two elements of lithium and magnesium.

12. The silicon-containing negative electrode active material according to any of claims 1-11, wherein, based on the total mass of the silicon-containing negative electrode active material,
the silicon-based material has a mass percentage content as W1 of from 90% to 98%;
the polymer has a mass percentage content as W2 of from 1% to 9%;
the one-dimension conductive material has a mass percentage content as W3 of from 0.1% to 1%,
optionally, W2/W3 is from 7 to 20.

13. The silicon-containing negative electrode active material according to any of claims 1-12, wherein the conductive layer has a thickness of is from 1nm to 2 µm.

14. The silicon-containing negative electrode active material according to any of claims 1-13, wherein,
the silicon-containing negative electrode active material has a powder resistivity of from 0.70 Ω-cm to 0.89 Ω-m; and/or
the silicon-containing negative electrode active material has an average particle size Dv50 of from 2 µm to 10 µm; and/or
the silicon-containing negative electrode active material has a specific surface area of from 0.8m²/g to 5m²/g; and/or
the silicon-containing negative electrode active material has a I_{g}/I_{d} of from 0.1 to 200, wherein I_{g} represents the peak intensity of the silicon-containing negative electrode active material in the range of 1500 cm⁻¹ to 1650 cm-1 in the Raman spectrum, and I_{d} represents the peak intensity of the silicon-containing negative electrode active material in the range of 100 cm⁻¹ to 200 cm⁻¹ in the Raman spectrum.

15. A negative electrode plate, comprising a negative current collector and a negative electrode film layer located on at least one of the surfaces of the negative current collector, wherein the negative electrode film layer comprises the silicon-containing negative electrode active material, conductive agent, and binder according to any of claims 1-14, and
optionally, the negative electrode film layer further comprises graphite.

16. A secondary battery, comprising the silicon-containing negative electrode active material according to any of claims 1-14, or the negative electrode plate according to claim 15.

17. An electrical device, comprising the secondary battery according to claim 16.
